# EUROPEAN PATENT SPECIFICATION

(11) **EP 2 624 547 B1**
(45) Date of publication and mention of the grant of the patent: **16.11.2016**
(21) Application number: 10857872.5
(22) Date of filing: 01.10.2010
(51) Int. Cl.: H04N 7/173, H04W 4/06, H04N 19/507, H04N 21/436, H04N 21/4363, H04N 21/443, H04N 21/61

(54) **COMMUNICATION SYSTEM, SERVER, TERMINAL, AND TERMINAL CONTROL METHOD**
KOMMUNIKATIONSSYSTEM, SERVER, ENDGERÄT UND STEUERUNGSVERFAHREN FÜR EIN ENDGERÄT
SYSTÈME DE COMMUNICATION, SERVEUR, TERMINAL ET PROCÉDÉ DE COMMANDE DE TERMINAL

(43) Date of publication of application: 07.08.2013
(73) Proprietor: Fujitsu Limited, Kawasaki-shi, Kanagawa 211-8588 (JP)
(72) Inventor: MATSUOKA, Hideki, Kawasaki-shi Kanagawa 211-8588 (JP)
(74) Representative: Wilding, Frances Ward
(86) International application number: PCT/JP2010/067210
(87) International publication number: WO 2012/042659

(56) References cited:
- JP-A- 2003 069 915
- JP-A- 2004 180 271
- JP-A- 2010 171 670
- JP-A- 2010 508 727
- US-A- 5 903 673
- US-A1- 2009 023 482
- US-A1- 2010 045 772
- NAMGOONG W ET AL: "LOW-POWER VIDEO ENCODER/DECODER USING WAVELET/TSVQ WITH CONDITIONAL REPLENISHMENT", 1996 IEEE INTERNATIONAL CONFERENCE ON ACOUSTICS, SPEECH, AND SIGNAL PROCESSING - PROCEEDINGS. (ICASSP). ATLANTA, MAY 7 - 10, 1996; [IEEE INTERNATIONAL CONFERENCE ON ACOUSTICS, SPEECH, AND SIGNAL PROCESSING - PROCEEDINGS. (ICASSP)], NEW YORK, IEEE, US, vol. CONF. 21, 7 May 1996 (1996-05-07), pages 3240-3243, XP000681745, DOI: 10.1109/ICASSP.1996.550567 ISBN: 978-0-7803-3193-8
- BROFFERIO S ET AL: "COMPUTATION BOUNDED VIDEO CODING", SIGNAL PROCESSING OF HDTV. L'AQUILA, FEB. 29 - MAR. 2, 1988; [PROCEEDINGS OF THE INTERNATIONAL WORKSHOP ON SIGNAL PROCESSING OF HDTV], AMSTERDAM, ELSEVIER, NL, vol. WORKSHOP 2, 29 February 1988 (1988-02-29), pages 199-205, XP000075054,

## Description

### FIELD

The embodiments discussed herein are directed to a communication system, a server, a terminal, and a control method of the terminal.

### BACKGROUND

In recent years, a lot of terminals such as cellular phones have contained functions to receive and replay video data including a moving picture or sound.

The terminal, for example, displays video data received from external devices such as a server or video data read from a storage device in the terminal on a screen and outputs a sound included in the video data through a speaker and the like to replay a sound-added moving picture.

Herein, the replay function, for example, consumes power supplied from a battery of the terminal. For example, by considering frame rate indicating how often the screen is rewritten for one second at the time of replaying the moving picture, as the frame rate is higher, the moving picture can be displayed more smoothly and clearly, but a data amount handled for one second is increased, and as a result, power consumption becomes larger.

Further, as a technology for reducing the power consumption of the terminal, for example, a method has been known, which reduces power consumption by determining a type of program based on electronic program guide (EPG) data and replaying the program at frame rate corresponding to a type of determined program.

Further, for example, in a high speed packet access plus (HSPA+) mode communication system, an enhancement method of a continuous packet connectivity (CPC) function to reduce the power consumption of the terminal by performing discontinuous transmission/reception of data has been discussed.

### CITATION LIST

### PATENT LITERATURE

US 5,903,673 discloses a motion video signal encoder which maximizes image quality without exceeding transmission bandwidth available to carry the encoded motion video signal by comparing encoded frames of the motion video signal to a desired size of frame.

US2009/0023482 discloses a mobile information terminal that changes various settings associated with reproduction of a moving image content based on a type of the content so as to reduce power consumption.

US2010/0045772 discloses a method and an apparatus for a video call using transmission of divided image frames.
[Patent Literature 1] Japanese Laid-open Patent Publication No. 2006-287898 and [Patent Literature 2] Japanese Laid-open Patent Publication No. 2009-38803 are also cited here.

### SUMMARY OF THE INVENTION

### PROBLEMS TO BE SOLVED BY THE INVENTION

The video data has, for example, a plurality of frames. Further, the video data may include a period in which frames having the same content are continuous among the plurality of frames. During the corresponding period, the video data is replayed like a still image.

In general, high definition at the time of replaying the moving picture is not required at the time of replaying the still image.

However, since the terminal drives a function to replay the video data in higher definition in order to display the video data more smoothly and clearly even during the period, the power consumption of the terminal increases.

Therefore, one object of the invention is to reduce the power consumption of the terminal.

Further, the invention is not limited to the object, but another object has an operational effect which will not be acquired by the related art, as an operational effect induced by each component illustrated in embodiments for implementing the invention to be described below.

### MEANS TO SOLVE THE PROBLEMS

The invention is defined in the independent claims, to which reference should now be made. Advantageous embodiments are set out in the sub claims.

### EFFECT OF THE INVENTION

The power consumption of the terminal can be reduced.

### BRIEF DESCRIPTION OF DRAWINGS

FIG. 1 is a diagram illustrating an example of a configuration of a communication system according to an embodiment of the invention.
FIG. 2 is a diagram illustrating an example of a configuration of a server illustrated in FIG. 1.
FIG. 3 is a diagram illustrating an example of a configuration of a server-side detection unit.
FIGS. 4(A) and 4(B) are diagrams illustrating an example of frame processing.
FIG. 5 is a diagram illustrating an example of a configuration of an encoding unit.
FIG. 6 is a flowchart illustrating an example of an operation of the server illustrated in FIG. 1.
FIG. 7 is a diagram illustrating an example of a configuration of a terminal illustrated in FIG. 1.
FIG. 8 is a flowchart illustrating an example of an operation of the terminal illustrated in FIG. 1.
FIGS. 9(A) and 9(B) are diagrams for describing a CPC function.

### DESCRIPTION OF EMBODIMENTS

Hereinafter, embodiments of the present invention will be described with reference to the drawings. However, the embodiments described below are just examples and various modifications or applications of a technology which are not described in the embodiments described below are not intended to be excluded. That is, various modifications of the embodiments can be made without departing from the scope of the present invention.

### [1] Description of embodiment

### (1.1) Configuration example of communication system

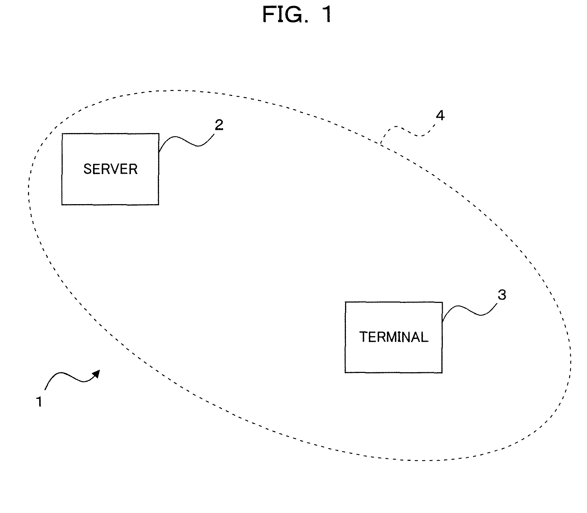

FIG. 1 is a diagram illustrating an example of a configuration of a communication system according to an embodiment of the invention. A communication system 1 illustrated in FIG. 1 illustratively includes a server 2 and a terminal 3. Note that, the number of servers 2 and terminals 3 are not limited to the number illustrated in FIG. 1. Further, hereinafter, a wireless communication system in which the server 2 and the terminal 3 communicate with each other through a wireless propagation channel will be described as an example, but the wireless communication system is just one example of the communication system 1, and for example, the server 2 and the terminal 3 may be indirectly connected to each other through a repeater and the like, or connected in a wired manner.

Herein, the server 2 provides a communication service area 4 constituted by a cell or a selector and may wirelessly communicate with the terminal 3 positioned in the corresponding communication service area 4. Further, the server 2 may transmit video data constituted by a plurality of frames to the terminal 3. Note that, the video data may include, for example, sound data.

The terminal 3 may wirelessly communicate with the server 2 providing the communication service area 4 to which a local station 3 belongs. Further, the terminal 3 may receive the video data transmitted from the server 2 and replay the received video data. In addition, the terminal 3 may output the sound data included in the video data through a speaker and the like and replay the sound data.

In the embodiment, the terminal 3 performs a control to change an energy amount consumed for replaying the video data depending on a period in which the same (hereinafter, "the same" includes "substantially the same") frame is consecutive among the plurality of frames included in the video data and a period in which the same frame is not consecutive to thereby reduce the power consumption of the terminal 3.

### (1.2) In regard to server 2

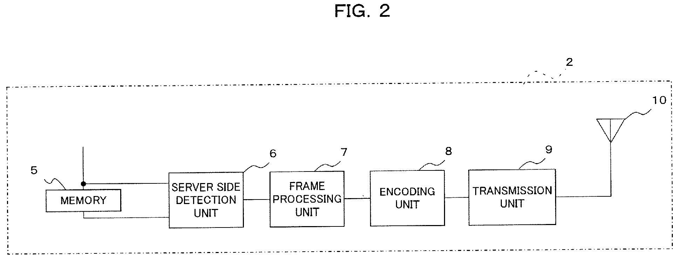

Herein, FIG.2 illustrates an example of a configuration of the server 2. The server 2 illustrated in FIG. 2 illustratively includes a memory 5, a server-side detection unit 6, a frame processing unit 7, an encoding unit 8, a transmission unit 9, and an antenna 10.

The memory 5 temporally stores the video data and thereafter, outputs the video data to the server-side detection unit 6. Note that, for example, the video data may be input from the outside of the server 2 or input from a storage device (not illustrated) in the server 2.

That is, the memory 5 outputs each frame included in the input video data for a predetermined delay time. Herein, for example, when the predetermined delay time is a time (that is, a reciprocal of frame rate) allocated to each frame included in the video data, adjacent frames among the plurality of frames included in the video data may be sequentially output to the server-side detection unit 6.

Note that, the number of memories 5 illustrated in FIG. 2 is just an example and is not limited to the example illustrated in FIG. 2. For example, as the number (number of row) of memories 5 increases, the number of frames output to the server-side detection unit 6 increases, and detection precision in the server-side detection unit 6 may be improved or a processing speed may be improved.

Herein, the server-side detection unit 6 detects the period in which the same frame is consecutive among the plurality of input frames. For example, the server-side detection unit 6 detects whether the plurality of input frames have the same content and calculates a period or a ratio in which the frame detected as the same content occupies the plurality of frames included in the video data. Note that, the same described in the embodiment includes substantially the same as described above.

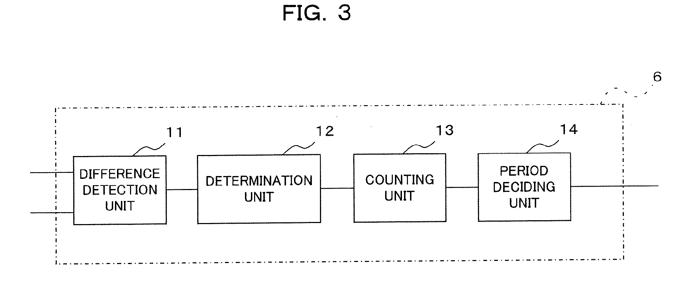

As a result, the server-side detection unit 6 includes a difference detection unit 11, a determination unit 12, a counting unit 13, and a period deciding unit 14 as illustrated in FIG. 3. Note that, a detection result in the server-side detection unit 6 and each frame (video data) input into the server-side detection unit 6 are output to the frame processing unit 7.

The difference detection unit 11 detects differences between the plurality of input frames. For example, when the predetermined delay time in the memory 5 is set to a reciprocal of the frame rate of the video data, the difference detection unit 11 may detect a difference between adjacent frames among the plurality of frames included in the video data.

In detail, for example, the difference detection unit 11 acquires a difference between luminance components (Y components) by a pixel unit and outputs the acquired difference to the determination unit 12, with respect to a frame (current frame) input not through the memory 5 and a frame (past frame) with a predetermined delay time by the memory 5. Note that, the difference detection unit 11 may convert the corresponding difference into an absolute value.

The determination unit 12 determines whether the adjacent frames are the same as each other based on the difference detected by the difference detection unit 11. For example, the determination unit 12 compares a predetermined threshold (movement threshold) with the difference detected by the difference detection unit 11, and when the difference detected by the difference detection unit 11 is equal to or less than the movement threshold, video data of the adjacent frames may be determined as video data of the same frame.

That is, the determination unit 12 determines during the period in which the video data of the adjacent frames is the video data of the same frame as a state in which the video data is a still image.

Note that, when the movement threshold is set to 0, the determination unit 12 may determine a period in which the corresponding frame occupies the video data as the period of the still image in the case where the frames input into the server-side detection unit 6 are strictly the same as each other.

Meanwhile, when the movement threshold is set to a value which is larger than 0, the determination unit 12 may determine that the video data of the frame input into the server-side detection unit 6 are the substantially same as each other and determine the period in which the corresponding frame occupies the video data as the period of the still image, even in the case where the input frames are not strictly the same as each other, that is, a slight movement is included between the frames.

As described below, the terminal 3 does not provide the function to replay the video data with high definition and stops supplying power to the corresponding function, during the period (that is, the period in which the video data is in the state of the still image) in which the same frame is consecutive among the plurality of frames included in the video data. Note that, the high definition described herein means image quality required when the video data is the moving picture and means higher image quality than image quality required when the video data is in the state of the still image.

As a ratio (period) in which the adjacent frames are the same as each other among the plurality of frames included in the video data increases, the video data includes more of the still images, and as a result, the power consumption of the terminal 3 may be significantly reduced.

That is, the power consumption of the terminal 3 may be controlled by controlling the movement threshold in the determination unit 12. However, as the movement threshold increases, since a ratio of the same frame (still image frame) to all frames included in the video data is regarded higher, a period in which the video data is disabled to be replayed with higher definition in the terminal 3 may increase.

As a result, the movement threshold may be appropriately adjusted by, for example, a content of the video data or user's setting.

Further, a determination result in the determination unit 12 is output to the counting unit 13. That is, the number of times at which the determination unit 12 determines that the frames input into the server-side detection unit 6 have the same content is output to the counting unit 13.

The counting unit 13 counts the number of times at which the determination unit 12 determines that the frames are the same as each other. Further, when the determination unit 12 determines that the frames are not the same as each other, a count value of the counting unit 13 is not incremented. A counting result in the counting unit 13 is output to the period deciding unit 14.

The period deciding unit 14 determines whether the number of times counted by the counting unit 13 is equal to or more than a predetermined value (period threshold). In addition, when it is determined that the number of times counted by the counting unit 13 is equal to or more than the predetermined value, the period deciding unit 14 detects a period which the frame determined by the determination unit 12 occupies among the plurality of frames included in the video data and outputs the detected period to the frame processing unit 7.

For example, when the period threshold is set to "3", the period deciding unit 14 detects a period which the corresponding frame occupies as the period in which the video data is the state of the still image and outputs the corresponding detection result, in the case where the number of times at which the determination unit 12 determines that the input frames are the same as each other is equal to or more than 3.

That is, when the determination unit 12 determines that an n (≥ 1)-th frame and a (n + 1)-th frame are the same as each other, determines that the (n + 1)-th frame and a (n + 2)-th frame are the same as each other, and further, determines that the (n + 2)-th frame and a (n + 3)-th frame are the same as each other, the period deciding unit 14 determines a video expressed by the n-th frame to the (n + 3)-th frame as the still image. In addition, the period deciding unit 14 calculates a period of the determined still image frame in the video data and outputs the corresponding calculated result.

The frame processing unit 7 reduces a data size of the frame during the period (the period of the still image in the video data) detected by the server-side detection unit 6. For example, the frame processing unit 7 may reduce the data size (information amount) of the frame by decreasing predetermined pixels in the corresponding frame. Further, for example, the frame processing unit 7 may reduce the data size of the frame by decreasing frame rate during the period detected by the server-side detection unit 6.

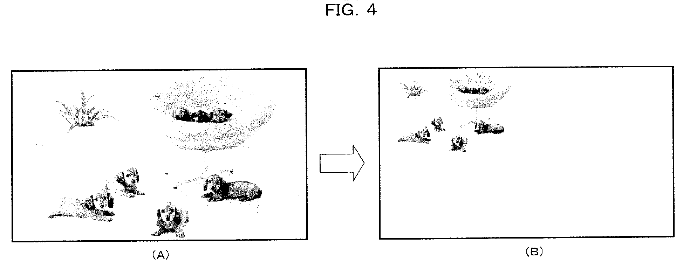

Herein, an example of the frame processing is illustrated in FIG. 4. FIG. 4(A) is an example of the frame before the frame processing by the frame processing unit 7, and FIG. 4(B) is an example of the frame after the frame processing by the frame processing unit 7.

As illustrated in FIGS. 4(A) and 4(B), the frame processing unit 7 reduces the data size of the frame by decreasing predetermined pixels from an image expressed by the frame. Note that, in the case of the image expressed by the frame after the frame processing by the frame processing unit 7, the frame size may be reduced as illustrated in FIG. 4(B).

The video data including the frame after the predetermined frame processing by the frame processing unit 7 is output to the encoding unit 8.

The encoding unit 8 performs predetermined encoding of the video data including the frame after the predetermined frame processing. The video data encoded by the encoding unit 8 is output to the transmission unit 9.

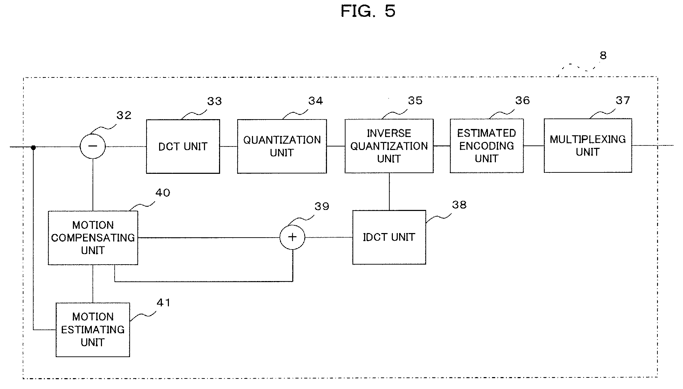

Herein, FIG. 5 illustrates an example of a configuration of the encoding unit 8. As illustrated in FIG. 5, the encoding unit 8 illustratively includes a subtraction unit 32, a discrete cosine transform (DCT) unit 33, a quantization unit 34, an inverse quantization unit 35, an estimated encoding unit 36, a multiplexing unit 37, and an inverse DCT (IDCT unit) 38. Further, the encoding unit 8 illustratively includes an addition unit 39, a motion compensating unit 40, and a motion estimating unit 41.

The subtraction unit 32 subtracts an output signal from the motion compensating unit 40, from the input video data and outputs a subtraction result to the DCT unit 33.

The DCT unit 33 performs discrete cosine transforming of the input video data. The discrete cosine transforming is a transformation technology for facilitating compression of an original image, and in detail, for example, pixels of 8 pixels x 8 lines are collected to form a block and compressed and encoded by a block unit. The discrete cosine transforming is a compressing and encoding technology having a structure to decompose an image to frequency components such as a low frequency or a high frequency, and for example, changing an image expression from the pixel block to the frequency components, and the discrete cosine transforming is reversible processing in which all information included in the original image is conserved.

The quantization unit 34 performs quantization processing of the signal input from the DCT unit 33. Quantization means replacing a consecutive signal (physical quantity) with a discrete signal (gradient). Quantization of a DCT coefficient is performed by acquiring what times the DCT coefficient is more than a predetermined quantization step size with an integral value which is rounded off. For example, 64 levels which the DCT coefficient may acquire may be limited by the quantization.

The inverse quantization unit 35 performs inverse quantization processing of the signal input from the quantization unit 34. Inverse quantization means that precision of the quantized signal (gradient) deteriorates and the quantized signal is again divided into smaller (coarse) sections or returned to an original section. Herein, a quantization table for a luminance component and a color-difference component may be used. Human eyes have a visual characteristic that it is more difficult to recognize a distortion of a high spatial frequency. By using the visual characteristic, the quantization step size becomes larger and coarser quantization is performed, as the spatial frequency becomes higher. Note that, for example, image quality in a Joint Photographic Experts Group (JPEG) mode may be controlled by multiplying a predetermined multiplier by the quantization table.

The IDCT unit 38 performs inverse discrete cosine transforming of the signal input from the inverse quantization unit 35. The inverse discrete cosine transforming is an example of processing for transforming the spatial frequency into the image signal. Note that, in the JPEG mode, first, the input signal is divided into units called a minimum coded unit (MCU) which is a set of blocks constituted by 8 x 8 pixels.

The addition unit 39 adds the signal output from the IDCT unit 38 and a delay signal with which the signal output from the motion compensating unit 40 is delayed to each other to output the added signals to the motion compensating unit 40.

The estimated encoding unit (entropy encoding unit) 36 performs encoding of the signal input from the inverse quantization unit 35. In detail, for example, the estimated encoding unit 36 allocates a short code to a symbol (a quantized transformation coefficient) of which an appearance frequency is high, while allocates a long code to a symbol of which an appearance frequency is low. Note that, the encoding method includes, for example, Huffman encoding or arithmetic encoding.

The motion compensating unit 40 performs efficient compression by considering how any image moves in the frame among consecutive frames in compressing moving picture data. For example, the motion compensating unit 40 detects vector data of a part (moved part) which is changed between two frames and synthesizes the detected vector data and a part which is not changed to make data of the part which is not changed be smaller by one frame.

The motion estimating unit 41 estimates a motion for each frame of the input video data. For example, a lot of images (frames) at two times of the moving picture are similar to each other. Therefore, when an image frame at a time t is provided, an image frame at the next time t + 1 may be reproduced based on a difference from the image frame at the time t. Further, when the image frame at the time t and an image frame at another time t + 2d are provided, an image frame at a time t + d can be reproduced.

The multiplexing unit 37 multiplexes the output from the estimated encoding unit 36 by a multiplexing method defined by, for example, a Moving Picture Experts Group phase 2 (MPEG-2) or a Moving Picture Experts Group phase 4 (MPEG-4) mode. Video data multiplexed by the multiplexing unit 37 is streamed in a predetermined system format. Further, data input into the multiplexing unit 37 includes, for example, a video object, a sound object, a computer graphics (CG) object, and the like.

The transmission unit 9 performs predetermined transmission processing of the video data encoded by the encoding unit 8. The predetermined transmission processing includes, for example, digital-analog conversion processing or wireless transmission processing such as up-convert.

Further, the video data transmitted by the transmission unit 9 is transmitted to the terminal 3 by an antenna 10.

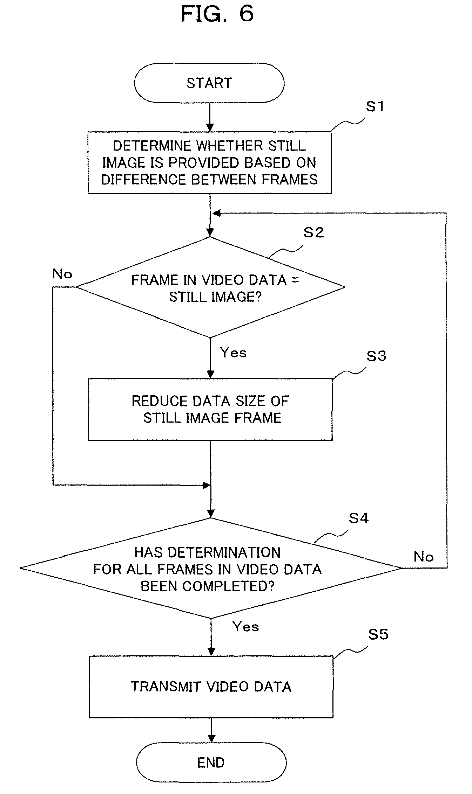

Herein, FIG. 6 illustrates an example of an operation of the server 2 having the above configuration.

As illustrated in FIG. 6, first, the server 2 detects a difference between adjacent frames among a plurality of frames included in video data, and determines whether the adjacent frames are the same as each other (that is, whether a video expressed by the adjacent frames is a still image) based on the corresponding detected difference (step S1).

Subsequently, the server 2 determines whether a current frame (a frame during reading) among the plurality of frames included in the video data is a frame during a period determined as the still image in step S1 (step S2).

Herein, when the current frame is determined as the frame during the period determined as the still image in step S1 (Yes route of step S2), the server 2 reduces a data size of the corresponding frame (still image frame) (step S3).

Meanwhile, when the current frame is not determined as the frame during the period determined as the still image in step S1 (No route of step S2), the server 2 determines that the corresponding frame is a frame configuring a moving picture in the video data and does not reduce the data size of the corresponding frame.

Further, the server 2 determines whether the determination processing of step S2 is completed with respect to all of the frames included in the video data (step S4), and when the server 2 determines that the determination processing is not completed (No route of step S4), the process proceeds to step S2. Note that, in the processing of step S4, it may be determined whether the determination processing of step S2 is completed with respect to a predetermined number of frames included in the video data.

Further, when the server 2 determines that the determination processing of step S2 is completed with respect to all of the frames included in the video data (Yes route of step S4), the server 2 transmits the video data to the terminal 3 (step S5).

As described above, since a data size of a frame configuring a still image among the plurality of frames included in the video frame is reduced and transmitted in the server 2, a communication traffic amount of the communication system 1 may be reduced.

Further, when the communication system 1 adopts HSPA+ as a communication mode, a communication traffic amount may be further reduced or power consumption of the server 2 may be reduced by using, for example, a CPC function in the HSPA+ mode.

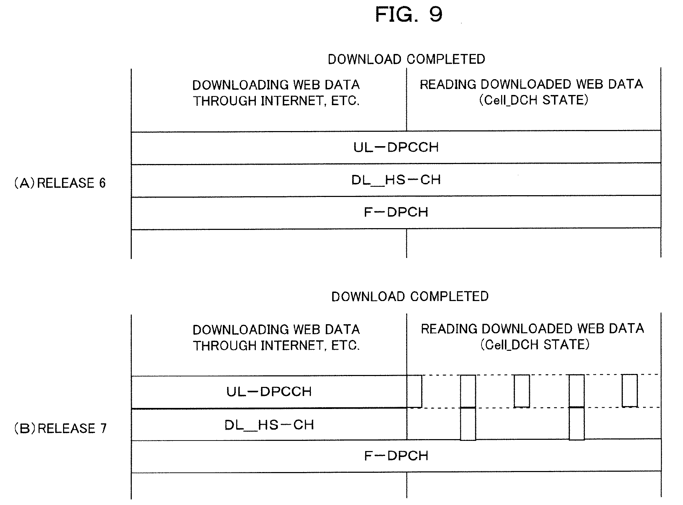

Herein, the CPC function in the HSPA+ will be described with reference to FIGS. 9(A) and 9(B).

As illustrated in FIG. 9(A), during both periods of a period in which the terminal 3 is downloading data and a period in which the terminal 3 is connected with the server 2 through individual channels (Cell_DCH: Cell_Dedicated CHannel) after downloading and the downloaded data is being read, in a release 6 of the HSPA+, the terminal 3 consecutively transmits user data or control information to the server 2 by using an UpLink-Dedicated Physical Control Channel (UL-DPCCH). Further, during both periods, the terminal 3 consecutively receives other data from the server 2 by using a DownLink_High Speed Channel (DL_HS-CH).

Meanwhile, as illustrated in FIG. 9(B), in a release 7 of the HSPA+, the terminal 3 consecutively transmits the user data, control information, or the like to the server 2 by using the UL-DPCCH during the period of downloading data and consecutively receives other data from the server 2 by using the DL_HS-CH, but the terminal 3 is connected with the server 2 through the Cell_DCH after downloading, and the terminal 3 inconsecutively transmits the user data, control information, or the like to the server 2 by using the UL-DPCCH and inconsecutively receives other data or the like from the server 2 by using the DL_HS-CH, during the period of reading the downloaded data. Note that, an execution timing of inconsecutive reception may be synchronized with a part of an execution timing of inconsecutive transmission.

Further, in either one of the releases 6 and 7, as illustrated in FIGS. 9(A) and 9(B), the terminal 3 controls power by using a Fractional-Dedicated Physical Channel (F-DPCH). The F-DPCH is a channel in which data is consecutively transmitted/received.

As such, in the release 7 of the HSPA+, the CPC function to inconsecutively transmit/receive data is adopted, and the communication traffic amount is reduced and the power consumption is reduced.

By the way, for example, after the terminal 3 downloads Internet site information, the CPC function is applied in a state in which an end user reads the site information, and the CPC function is applied in the case where a downloaded data amount is comparatively small (equal to or less than a predetermined data amount threshold).

Meanwhile, the CPC function is not applied in the case where the downloaded data amount is comparatively large (larger than the predetermined data amount threshold) so as to receive the moving picture data or still image data from an electronic book or a moving picture delivery server.

As a result, in a moving picture and still image delivery system, since the terminal 3 consecutively transmits/receives data at all times, the communication traffic amount is not to be reduced and the power consumption is not to be reduced.

Further, since a conventional server performs encoding and modulating with respect to each frame included in the video data every frame and transmits the corresponding frame to the terminal, the same video data may be transmitted/received. As a result, by unnecessary data transmission/reception processing, the power consumption of the server and the terminal may be increased or traffic may be increased in the communication system.

Further, since the density of a video data amount after encoding is large, the CPC function is not turned on with respect to a data amount within a transmission time interval (TTI). Further, in the case of a high definition (HD) video, a pixel number of 1920 x 1080 or a pixel number of 1440 x 1080 is a mainstream.

Accordingly, the server 2 of the embodiment reduces the data sizes of some frames among the plurality of frames included in the video data and sets the transmission data amount to a predetermined data amount threshold or less to thereby turn on the CPC function.

That is, the transmission unit 9 inconsecutively transmits the video data to the terminal 3 during a period in which the video data is detected by the server-side detection unit 6. Further, in this case, the transmission unit 9 may transmit, to the terminal 3, control information (hereinafter, also referred to as a CPC flag) indicating that the CPC function is turned on.

As a result, since the server 2 may turn on the CPC function during the period of the still image frame among the plurality of frames included in the video data, the communication traffic amount of the communication system 1 may be reduced and the power consumption may be reduced.

### (1.3) In regard to terminal 3

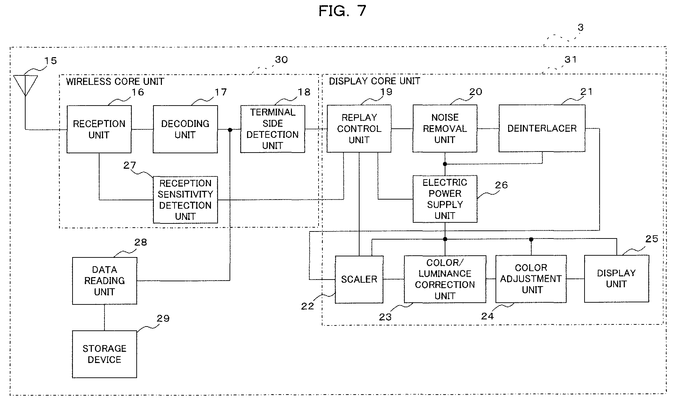

Subsequently, FIG. 7 illustrates an example of a configuration of the terminal 3. The terminal 3 illustrated in FIG. 7 illustratively includes an antenna 15, a reception unit 16, a decoding unit 17, a terminal-side detection unit 18, a replay control unit 19, a noise removal unit 20, a deinterlacer 21, a scaler 22, a color/luminance correction unit 23, a color adjustment unit 24, and a display unit 25. Further, the terminal 3 illustratively includes an electric power supply unit 26, a reception sensitivity detection unit 27, a data reading unit 28, and a storage device 29.

Herein, the antenna 15 receives the video data transmitted from the server 2.

The reception unit 16 performs predetermined reception processing of the video data received by the antenna 15. The predetermined reception processing includes, for example, analog-digital conversion processing or wireless reception processing such as down-convert. The video data subjected to the predetermined reception processing by the reception unit 16 is transmitted to the decoding unit 17 and the reception sensitivity detection unit 27.

The decoding unit 17 performs predetermined decoding processing of the video data subjected to the predetermined reception processing by the reception unit 16. The video data subjected to the predetermined decoding processing by the decoding unit 17 is transmitted to the terminal-side detection unit 18.

Further, the storage device 29 stores the video data and the data reading unit 28 reads the video data stored in the storage device 29. Note that, the video data stored in the storage device 29 may be input from the outside of the terminal 3. The video data read by the data reading unit 28 is transmitted to the terminal-side detection unit 18.

That is, the antenna 15 and the reception unit 16, and the storage device 29 and the data reading unit 28 serve as an example of an input unit inputting the video data.

Further, the reception unit 16 may receive, from the server 2, the control information indicating that the CPC function is turned on.

When the reception unit 16 receives the control information, the terminal 3 deciphers system information with, for example, an upper layer in a wireless core unit 30 and instructs a turn-on instruction of the CPC function to a lower layer of the wireless core unit 30, and actuates the CPC function. Note that, the wireless core unit 30 represents, for example, a functional block for wireless reception processing, which is constituted by the reception unit 16, the decoding unit 17, the terminal-side detection unit 18, and the reception sensitivity detection unit 27.

Further, when the CPC function is turned on in the terminal 3, the reception unit 16 inconsecutively receives the video data transmitted from the server 2.

That is, the reception unit 16 has a function to inconsecutively input the video data during the period in which the same frame is consecutive among the plurality of frames included in the video data.

As a result, since the communication traffic amount of the communication system 1 may be reduced and the reception unit 16 may intermittently operate, the power consumption amount in the terminal 3 may be reduced.

The terminal-side detection unit 18 detects the period in which the same frame is consecutive among the plurality of input frames. For example, the terminal-side detection unit 18 detects whether the plurality of input frames have the same content and calculates a period or a ratio in which the frame detected as the same content occupies the plurality of frames included in the video data. As a result, the terminal-side detection unit 18 has the same configuration and function as the server-side detection unit 6. A detection result in the terminal-side detection unit 18 is transmitted to the replay control unit 19.

Further, the reception sensitivity detection unit 27 detects reception sensitivity of the video data received by the reception unit 16. The reception sensitivity detected by the reception sensitivity detection unit 27 is transmitted to the replay control unit 19.

Herein, the replay control unit 19 performs a control to replay the video data by using a first power amount during the period in which the video data of the same frame is not consecutive among the video data of the plurality of frames and replay the video data by using a second power amount (< the first power amount) during the period in which the video data of the same frame is consecutive among the video data of the plurality of frames.

As a result, during the period in which the video data is the moving picture, the video data may be replayed with higher definition, while during the period in which the video data is the still image, the video data may be replayed with low definition, and the power consumption of the terminal 3 may be reduced while the video data is replayed with low definition.

Further, the replay control unit 19 may perform a control to replay the frame of which the data size is reduced by the frame processing unit 7 by using the second power amount, while replay the frame of which the data size is not reduced by the frame processing unit 7 by using the first power amount.

In addition, the replay control unit 19 may perform a control to replay the video data by using the second power amount during a period detected by the terminal-side detection unit 18, while replay the video data by using the first power amount during a period different from the period detected by the terminal-side detection unit 18.

Further, the replay control unit 19 may perform a control to replay the video data by using the second power amount during a period in which the reception sensitivity detected by the reception sensitivity detection unit 27 is less than a predetermined threshold, while replay the video data by using the first power amount during a period in which the reception sensitivity detected by the reception sensitivity detection unit 27 is equal to or more than the predetermined threshold. As a result, when the quality of a communication channel between the server 2 and the terminal 3 is not good, the power consumption of the terminal 3 may be reduced while giving up high-definition replay of the video data.

In addition, the replay control unit 19 detects that the CPC function is turned on and may perform a control to replay the video data by using the second power amount with the corresponding detection as a trigger, when a CPC flag received by the server 2 is "1".

Meanwhile, the replay control unit 19 detects that the CPC function is turned off and may perform a control to replay the video data by using the first power amount with the corresponding detection as the trigger, when the CPC flag received by the server 2 is "0".

Herein, the replay control unit 19 reduces a power supply amount to the function to replay the video data to make the second power amount be smaller than the first power amount.

In detail, for example, the replay control unit 19 controls the electric power supply unit 26 that supplies power to the noise removal unit 20, the deinterlacer 21, the scaler 22, the color/luminance correction unit 23, the color adjustment unit 24, and the display unit 25 as one example of the function to replay the video data.

For example, the replay control unit 19 controls the electric power supply unit 26 to stop supplying the power to the noise removal unit 20 and the deinterlacer 21 to make the second power amount be smaller than the first power amount. Further, in this case, the video data may be transmitted from the replay control unit 19 to not the noise removal unit 20 but the scaler 22.

Further, for example, the replay control unit 19 may make the second power amount be smaller than the first power amount by controlling the electric power supply unit 26 to reduce the supplying of the power to the display unit 25.

Herein, the noise removal unit 20 reduces a noise component included in the video data. For example, the noise removal unit 20 calculates an average of a current frame and a previous frame which is earlier than the current frame by one frame with respect to a small part of one frame pixel difference (luminance). Further, the noise removal unit 20 may delay the input frame by one frame and reduce noise by using a frame cyclic low-pass filter used in a next frame.

Further, the deinterlacer 21 frame-rate-converts the input frame into progressive images having information amounts such as a double speed, a quad-speed, and the like.

In addition, the scaler 22 performs enlargement and contour enhancement processing of the input frame. Further, the contour enhancement processing is processing that performs optimal contour enhancement according to horizontal and vertical enlargement magnifications.

Further, the color/luminance correction unit 23 corrects the color and the luminance of the input frame, and the color adjustment unit 24 adjusts the color of the input frame by using a level correction method (for example, a color adjustment method by a histogram).

The display unit 25 is a display device for displaying the video data.

According to the embodiment, during the period in which the video data is the still image, the supplying of the power to the noise removal unit 20 and the deinterlacer 21 stops and the video data is displayed on the display unit 25 by the respective processing of the scaler 22, the color/luminance correction unit 23, and the color adjustment unit 24.

That is, the replay control unit 19, the noise removal unit 20, the deinterlacer 21, the scaler 22, the color/luminance correction unit 23, the color adjustment unit 24, and the display unit 25 constitute a functional block (display core unit 31) for displaying the video.

As a result, the power consumption of the terminal 3 may be significantly reduced. Further, since the scaler has a function to improve resolution to some extent by extending the frame size included in the video data or performing sharpening as large as an edge in edge detection, when the video data transmitted from the server 2 is progressive, the function of the scaler does not influence the image quality of the still image.

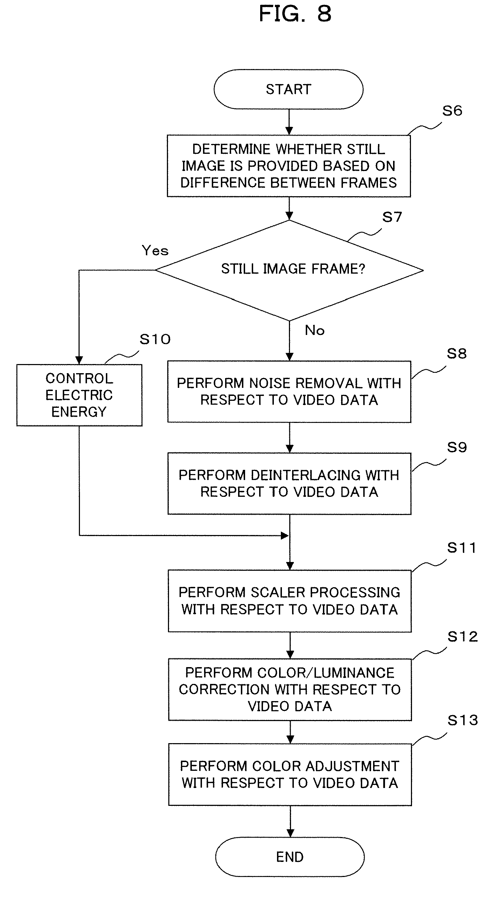

Herein, FIG. 8 illustrates an example of an operation of the terminal 3 having the above configuration.

As illustrated in FIG. 8, first, the terminal 3 detects a difference between adjacent frames among a plurality of frames included in video data and determines whether the adjacent frames are the same as each other (that is, whether a video expressed by the adjacent frames is a still image) based on the corresponding detected difference (step S6).

Subsequently, the terminal 3 determines whether a current frame (a frame during reading) among the plurality of frames included in the video data is a frame during a period in which the image is determined as the still image in step S6 (step S7).

Herein, when the terminal 3 determines that the current frame is the frame during the period in which the image is the still image in step S6 (Yes route of step S7), the terminal 3 performs a power control to stop the supplying of the power to the noise removal unit 20 and the deinterlacer 21 (step S10).

Meanwhile, when the terminal 3 determines that the current frame is not the frame during the period in which the image is the still image in step S6 (No route of step S7), the terminal 3 determines that the corresponding frame is a frame configuring the moving picture in the video data and performs noise removal processing and deinterlacing of the corresponding frame (steps S8 and S9).

Further, the terminal 3 performs scaler processing, color/luminance correction processing, and the color adjustment processing with respect to the video data (steps S11 to S13).

As described above, since the terminal 3 performs a control to reduce the power amount consumed in replay processing with respect to the frame configuring the still image among the plurality of frames included in the video frame, the power consumption of the terminal 3 may be significantly reduced.

### (2) Others

Respective configurations and respective functions of the server 2 and the terminal 3 in the embodiments may be selected depending on situations or may be used in appropriate combination thereof. That is, respective configurations and respective functions may be selected or used in appropriate combination thereof so as to achieve the function of the present invention.

### Description of Reference Characters

- 1: COMMUNICATION SYSTEM
- 2: SERVER
- 3: TERMINAL
- 4: COMMUNICATION SERVICE AREA
- 5: MEMORY
- 6: SERVER-SIDE DETECTION UNIT
- 7: FRAME PROCESSING UNIT
- 8: ENCODING UNIT
- 9: TRANSMISSION UNIT
- 10, 15: ANTENNA
- 11: DIFFERENCE DETECTION UNIT
- 12: DETERMINATION UNIT
- 13: COUNTING UNIT
- 14: PERIOD DECIDING UNIT
- 16: RECEPTION UNIT
- 17: DECODING UNIT
- 18: TERMINAL SIDE DETECTION UNIT
- 19: REPLAY CONTROL UNIT
- 20: NOISE REMOVAL UNIT
- 21: DEINTERLACER
- 22: SCALER
- 23: COLOR/LUMINANCE CORRECTION UNIT
- 24: COLOR ADJUSTMENT UNIT
- 25: DISPLAY UNIT
- 26: ELECTRIC POWER SUPPLY UNIT
- 27: RECEPTION SENSITIVITY DETECTION UNIT
- 28: DATA READING UNIT
- 29: STORAGE DEVICE
- 30: WIRELESS CORE UNIT
- 31: DISPLAY CORE UNIT

## Claims

1. A communication system (1), comprising a server (2) for transmitting video data constituted by a plurality of frames to a terminal (3) and the terminal (3),
wherein the terminal (3) includes:
input units (16, 28) in which the video data is input; and
a replay control unit (19) which performs control so that during a period in which video data of the same frame is not consecutive among the video data of the plurality of frames, a first electric energy amount is used for replaying the video data input to the input units (16, 28), whereas during a period in which video data of the same frame is consecutive among the video data of the plurality of frames, a second electric energy amount which is smaller than the first electric energy amount is used for replaying the video data input to the input units (16, 28), **characterised in that**
the replay control unit (19) makes the second electric energy amount smaller than the first electric energy amount by reducing an electric power supply amount to a function to replay the video data.

2. A server (2) for transmitting video data constituted by a plurality of frames to a terminal (3), the server (2) comprising:
a server side detection unit (6) which detects a period in which video data of the same frame is consecutive among the video data of the plurality of frames;
a frame processing unit (7) which reduces a data size of the same frame during a period detected by the server side detection unit (6); and
a transmission unit (9) which transmits video data, including the frame of which the data size is reduced by the frame processing unit (7), to the terminal (3), wherein
the server side detection unit (6) including:
a difference detection unit (11) which detects a difference between adjacent frames among the plurality of frames;
a determination unit (12) which determines whether video data of the adjacent frames are the same as each other based on the difference detected by the difference detection unit (11);
a counting unit (13) which counts the number of times at which the determination unit (12) determines that the video data of the adjacent frames are the same as each other; and
a period deciding unit (14) which detects, when it is determined that the number of times counted by the counting unit (13) is equal to or more than a predetermined threshold, a consecutive period which is occupied by the frames of the same video data determined by the determination unit (12).

3. The server (2) according to claim 2, wherein the transmission unit (9) inconsecutively transmits the video data to the terminal (3) during the period detected by the server side detection unit (6).

4. A terminal (3), comprising:
input units (16, 28) in which video data constituted by a plurality of frames is input; and
a replay control unit (19) which performs control so that during a period in which video data of the same frame is not consecutive among the video data of the plurality of frames, a first electric energy amount is used for replaying the video data input to the input units (16, 28), whereas during a period in which video data of the same frame is consecutive among the video data of the plurality of frames, a second electric energy amount which is smaller than the first electric energy amount is used for replaying the video data input to the input units (16, 28), **characterised in that**
the replay control unit (19) makes the second electric energy amount smaller than the first electric energy amount by reducing an electric power supply amount to a function to replay the video data.

5. The terminal (3) according to claim 4, further comprising a terminal side detection unit (18) which detects a period in which video data of the same frame among video data of the plurality of frames is consecutive,
wherein the replay control unit (19) performs control in which the video data is replayed by using the second electric energy amount during the period detected by the terminal side detection unit (18).

6. The terminal (3) according to claim 4 or 5, wherein the input units (16, 28) are inconsecutively input the video data during the period in which the video data of the same frame among the video data of the plurality of frames is consecutive.

7. The terminal (3) according to any one of claims 4 to 6, further comprising a reception sensitivity detection unit (27) which detects reception sensitivity of the video data,
wherein the replay control unit (19) performs control that the video data is replayed by using the second electric energy amount during a period in which the reception sensitivity detected by the reception sensitivity detection unit (27) is smaller than a predetermined threshold.

8. A terminal control method, wherein control is performed with respect to video data constituted by a plurality of frames so that during a period in which video data of the same frame is not consecutive among the video data of the plurality of frames, a first electric energy amount is used for replaying the video data, whereas during a period in which video data of the same frame is consecutive among the video data of the plurality of frames, a second electric energy amount which is smaller than the first electric energy amount is used for replaying the video data, and **characterised in that**
the second electric energy amount is made smaller than the first electric energy amount by reducing an electric power supply amount to a function to replay the video data.

## Patentansprüche

1. Kommunikationssystem (1), das einen Server (2) zum Übertragen von Videodaten, die aus mehreren Frames zusammengesetzt sind, an ein Endgerät (3) und das Endgerät (3) umfasst, wobei das Endgerät (3) Folgendes umfasst:
Eingabeeinheiten (16, 28), in die die Videodaten eingegeben werden; und
Wiedergabesteuereinheit (19), die eine Steuerung so ausführt, dass während eines Zeitraums, in dem Videodaten desselben Frames unter den Videodaten der mehreren Frames nicht aufeinanderfolgend sind, eine erste elektrische Energiemenge zum Wiedergeben der in die Eingabeeinheiten (16, 28) eingegebenen Videodaten verwendet wird, wohingegen während eines Zeitraums, in dem Videodaten desselben Frames unter den Videodaten der mehreren Frames aufeinanderfolgend sind, eine zweite elektrische Energiemenge, die kleiner als die erste elektrische Energiemenge ist, zum Wiedergeben der in die Eingabeeinheiten (16, 28) eingegebenen Videodaten verwendet wird, **dadurch gekennzeichnet, dass**
die Wiedergabeeinheit (19) die zweite elektrische Energiemenge durch Reduzieren einer elektrischen Energiezufuhrmenge zu einer Funktion zur Wiedergabe von Videodaten kleiner als die erste elektrische Energiemenge macht.

2. Server (2) zum Übertragen von Videodaten, die aus mehreren Frames zusammengesetzt sind, an ein Endgerät (3), wobei der Server (2) Folgendes umfasst:
eine serverseitige Erkennungseinheit (6), die einen Zeitraum erkennt, in dem Videodaten desselben Frames unter den Videodaten der mehreren Frames aufeinanderfolgend sind;
eine Frameverarbeitungseinheit (7), die eine Datengröße desselben Frames während eines Zeitraums, der von der serverseitigen Erkennungseinheit (6) erkannt wird, reduziert; und
eine Übertragungseinheit (9), die Videodaten, einschließlich des Frames, von dem die Datengröße durch die Frameverarbeitungseinheit (7) reduziert wird, an das Endgerät (3) überträgt, wobei:
die serverseitige Erkennungseinheit (6) Folgendes umfasst:
eine Abweichungserkennungseinheit (11), die eine Abweichung zwischen angrenzenden Frames unter den mehreren Frames erkennt;
eine Bestimmungseinheit (12), die basierend auf der durch die Abweichungserkennungseinheit (11) erkannten Abweichung bestimmt, ob Videodaten der angrenzenden Frames einander gleich sind;
eine Zähleinheit (13), die die Anzahl der Zeiten zählt, zu denen die Bestimmungseinheit (12) bestimmt, dass die Videodaten der angrenzenden Frames einander gleich sein; und
eine Zeitraumentscheideeinheit (14) die, wenn bestimmt wird, dass die Anzahl der Zeiten, die von der Zähleinheit (13) gezählt wird, gleich oder größer als ein vorbestimmter Schwellenwert ist, einen aufeinanderfolgenden Zeitraum erkennt, der von den Frames derselben Videodaten, die von der Bestimmungseinheit (12) bestimmt werden, eingenommen wird.

3. Server (2) nach Anspruch 2, wobei die Übertragungseinheit (9) die Videodaten während des von der serverseitigen Erkennungseinheit (6) erkannten Zeitraums nicht aufeinanderfolgend an das Endgerät (3) überträgt.

4. Endgerät (3), umfassend:
Eingabeeinheiten (16, 28), in denen Videodaten, die aus mehreren Frames zusammengesetzt sind, eingegeben werden; und
Wiedergabesteuereinheit (19), die eine Steuerung so ausführt, dass während eines Zeitraums, in dem Videodaten desselben Frames unter den Videodaten der mehreren Frames nicht aufeinanderfolgend sind, eine erste elektrische Energiemenge zum Wiedergeben der in die Eingabeeinheiten (16, 28) eingegebenen Videodaten verwendet wird, wohingegen während eines Zeitraums, in dem Videodaten desselben Frames unter den Videodaten der mehreren Frames aufeinanderfolgend sind, eine zweite elektrische Energiemenge, die kleiner als die erste elektrische Energiemenge ist, zum Wiedergeben der in die Eingabeeinheiten (16, 28) eingegebenen Videodaten verwendet wird, **dadurch gekennzeichnet, dass**
die Wiedergabeeinheit (19) die zweite elektrische Energiemenge durch Reduzieren einer elektrischen Energiezufuhrmenge auf eine Funktion zur Wiedergabe der Videodaten kleiner als die erste elektrische Energiemenge macht.

5. Endgerät (3) nach Anspruch 4, das ferner eine endgerätseitige Erkennungseinheit (18) umfasst, die einen Zeitraum erkennt, in dem Videodaten desselben Frames unter der Videodaten der mehreren Frames aufeinanderfolgend sind,
wobei die Wiedergabesteuereinheit (19) eine Steuerung ausführt, bei der die Videodaten unter Verwendung der zweiten elektrischen Energiemenge während des von der endgerätseitigen Erkennungseinheit (18) erkannten Zeitraums wiedergegeben werden.

6. Endgerät (3) nach Anspruch 4 oder 5, wobei den Eingabeeinheiten (16, 28) während des Zeitraums, in dem die Videodaten desselben Frames unter den Videodaten der mehreren Frames aufeinanderfolgend sind, die Videodaten nicht aufeinanderfolgend eingegeben werden.

7. Endgerät (3) nach einem der Ansprüche 4 bis 6, das ferner eine Empfangsempfindlichkeits-Erkennungseinheit (27) umfasst, die eine Empfangsempfindlichkeit der Videodaten erkennt,
wobei die Wiedergabesteuereinheit (19) eine Steuerung ausführt, sodass die Videodaten unter Verwendung der zweiten elektrischen Energiemenge während eines Zeitraums, in dem die von der Empfangsempfindlichkeits-Erkennungseinheit (27) erkannte Empfangsempfindlichkeit kleiner als ein vorbestimmter Schwellenwert ist, wiedergegeben werden.

8. Endgerät-Steuerverfahren, wobei eine Steuerung in Bezug auf Videodaten, die aus mehreren Frames zusammengesetzt sind, so ausgeführt wird, dass während eines Zeitraums, in dem Videodaten desselben Frames unter den Videodaten der mehreren Frames nicht aufeinanderfolgend sind, eine erste elektrische Energiemenge zum Wiedergeben der Videodaten verwendet wird, wohingegen während eines Zeitraums, in dem Videodaten desselben Frames unter den Videodaten der mehreren Frames aufeinanderfolgend sind, eine zweite elektrische Energiemenge, die kleiner als die erste elektrische Energiemenge ist, zum Wiedergeben der Videodaten verwendet wird, und **dadurch gekennzeichnet, dass**
die zweite elektrische Energiemenge durch Reduzieren einer elektrischen Energiezufuhrmenge auf eine Funktion zur Wiedergabe der Videodaten kleiner als die erste elektrische Energiemenge gemacht wird.

## Revendications

1. Système de communication (1), comprenant un serveur (2) destiné à transmettre des données vidéo constituées par une pluralité de trames, à un terminal (3), et comprenant le terminal (3),
dans lequel le terminal (3) inclut :
des unités d'entrée (16, 28) dans lesquelles les données vidéo sont appliquées en entrée ; et
une unité de commande de relecture (19) qui met en oeuvre une commande de sorte que lors d'une période dans laquelle des données vidéo de la même trame ne sont pas consécutives parmi les données vidéo de la pluralité de trames, une première quantité d'énergie électrique est utilisée pour relire les données vidéo appliquées en entrée aux unités d'entrée (16, 28), tandis que lors d'une période dans laquelle des données vidéo de la même trame sont consécutives parmi les données vidéo de la pluralité de trames, une seconde quantité d'énergie électrique, qui est inférieure à la première quantité d'énergie électrique, est utilisée pour relire les données vidéo appliquées en entrée aux unités d'entrée (16, 28), **caractérisé en ce que** :
l'unité de commande de relecture (19) amène la seconde quantité d'énergie électrique à être inférieure à la première quantité d'énergie électrique en réduisant une quantité de fourniture de puissance électrique au niveau d'une fonction destinée à relire les données vidéo.

2. Serveur (2) destiné à transmettre des données vidéo constituées par une pluralité de trames à un terminal (3), le serveur (2) comprenant :
une unité de détection côté serveur (6) qui détecte une période dans laquelle des données vidéo de la même trame sont consécutives parmi les données vidéo de la pluralité de trames ;
une unité de traitement de trames (7) qui réduit une taille de données de la même trame au cours d'une période détectée par l'unité de détection côté serveur (6) ; et
une unité de transmission (9) qui transmet des données vidéo, incluant la trame dont la taille de données est réduite par l'unité de traitement de trames (7), au terminal (3), dans lequel
l'unité de détection côté serveur (6) inclut :
une unité de détection de différence (11) qui détecte une différence entre des trames adjacentes parmi la pluralité de trames ;
une unité de détermination (12) qui détermine si des données vidéo des trames adjacentes sont mutuellement identiques sur la base de la différence détectée par l'unité de détection de différence (11) ;
une unité de comptage (13) qui compte le nombre de fois où l'unité de détermination (12) détermine que les données vidéo des trames adjacentes sont mutuellement identiques ; et
une unité de décision de période (14) qui détecte, lorsqu'il est déterminé que le nombre de fois compté par l'unité de comptage (13) est égal ou supérieur à un seuil prédéterminé, une période consécutive qui est occupée par les trames des mêmes données vidéo déterminées par l'unité de détermination (12).

3. Serveur (2) selon la revendication 2, dans lequel l'unité de transmission (9) transmet de manière non consécutive les données vidéo, au terminal (3), au cours de la période détectée par l'unité de détection côté serveur (6).

4. Terminal (3) comprenant :
des unités d'entrée (16, 28) dans lesquelles des données vidéo constituées par une pluralité de trames sont appliquées en entrée ; et
une unité de commande de relecture (19) qui met en oeuvre une commande de sorte que lors d'une période dans laquelle des données vidéo de la même trame ne sont pas consécutives parmi les données vidéo de la pluralité de trames, une première quantité d'énergie électrique est utilisée pour relire les données vidéo appliquées en entrée aux unités d'entrée (16, 28), tandis que lors d'une période dans laquelle des données vidéo de la même trame sont consécutives parmi les données vidéo de la pluralité de trames, une seconde quantité d'énergie électrique, qui est inférieure à la première quantité d'énergie électrique, est utilisée pour relire les données vidéo appliquées en entrée aux unités d'entrée (16, 28), **caractérisé en ce que** :
l'unité de commande de relecture (19) amène la seconde quantité d'énergie électrique à être inférieure à la première quantité d'énergie électrique en réduisant une quantité de fourniture de puissance électrique au niveau d'une fonction destinée à relire les données vidéo.

5. Terminal (3) selon la revendication 4, comprenant en outre une unité de détection côté terminal (18) qui détecte une période dans laquelle des données vidéo de la même trame parmi les données vidéo de la pluralité de trames sont consécutives,
dans lequel l'unité de commande de relecture (19) met en couvre une commande dans laquelle les données vidéo sont relues en utilisant la seconde quantité d'énergie électrique au cours de la période détectée par l'unité de détection côté terminal (18).

6. Terminal (3) selon la revendication 4 ou 5, dans lequel les unités d'entrée (16, 28) appliquent en entrée de manière non consécutive les données vidéo au cours de la période pendant laquelle les données vidéo de la même trame parmi les données vidéo de la pluralité de trames sont consécutives.

7. Terminal (3) selon l'une quelconque des revendications 4 à 6, comprenant en outre une unité de détection de sensibilité de réception (27) qui détecte une sensibilité de réception des données vidéo,
dans lequel l'unité de commande de relecture (19) met en oeuvre une commande de sorte que les données vidéo sont relues en utilisant la seconde quantité d'énergie électrique au cours d'une période dans laquelle la sensibilité de réception détectée par l'unité de détection de sensibilité de réception (27) est inférieure à un seuil prédéterminé.

8. Procédé de commande de terminal, dans lequel une commande est mise en oeuvre relativement à des données vidéo constituées par une pluralité de trames de sorte que lors d'une période dans laquelle des données vidéo de la même trame ne sont pas consécutives parmi les données vidéo de la pluralité de trames, une première quantité d'énergie électrique est utilisée pour relire les données vidéo, tandis que lors d'une période dans laquelle des données vidéo de la même trame sont consécutives parmi les données vidéo de la pluralité de trames, une seconde quantité d'énergie électrique, qui est inférieure à la première quantité d'énergie électrique, est utilisée pour relire les données vidéo, **caractérisé en ce que** :
la seconde quantité d'énergie électrique est amenée à être inférieure à la première quantité d'énergie électrique en réduisant une quantité de fourniture de puissance électrique au niveau d'une fonction destinée à relire les données vidéo.
